# EUROPEAN PATENT SPECIFICATION

(11) **EP 1 612 529 B1**
(45) Date of publication and mention of the grant of the patent: **11.04.2007**
(21) Application number: 05447162.8
(22) Date of filing: 04.07.2005
(51) Int. Cl.: G01K 17/00, G01N 25/48

(54) **Measurement of heat generated by a chemical or biologial process**
Messung der Wärme erzeugt durch einen chemischen oder biologischen Prozess.
Mesure de la chaleur dégagée suite à une réaction chimique ou biologique.

(30) Priority: 02.07.2004 US 585169 P; 19.07.2004 US 589100 P
(43) Date of publication of application: 04.01.2006
(73) Proprietor: Vivactis NV, 3001 Leuven (BE)
(72) Inventor: Verhaegen, Katarina, 3060 Bertem (BE)
(74) Representative: Bird, Ariane

(56) References cited:
- US-A- 3 724 820
- US-A1- 2004 110 301
- US-B1- 6 193 413

## Description

### Technical field of the invention

The present invention relates to a method and device for measuring the heat of an event between reagents of interest in at least two samples, which measurement occurs after chemical and preferably also thermal equilibrium between all sample components, except for the reagents of interest, has been reached.

### Background of the invention

A number of different types of thermal or temperature sensors exist. Two of the most common types are thermocouples and thermoresistors or thermistors.

In a thermocouple sensor the measurement of temperature is realised by what is known as the Seebeck effect, the physics of which is rather complicated. The basic idea of this Seebeck effect is that when two dissimilar materials, for example two dissimilar metals (e.g. copper and iron) are brought together in a circuit, and the junctions are held at different temperatures, then a small voltage is generated and an electrical current flows between them. The potential created by the temperature difference in the materials is measured by a voltmeter. The magnitude of the potential depends on the temperature difference of the two junctions and on the composition of the materials.

A thermoresistor measures the temperature by measuring the change in electrical resistance that occurs in a material, e.g. a metal, as it heats up. The electrical resistance of materials such as metals varies with their temperature. Therefore, the temperature can be measured by measuring the resistance of a piece of such a material. The main benefits of thermocouples and thermoresistors are that they are easy to isolate thermally from the remainder of a measurement device, which means not only a more accurate temperature measurement but also a faster response to changes in temperature.

One of the more interesting applications of thermal sensors is that they can be used for measuring fluid flow. The basic concept behind these sensors is that the volume flow rate of a fluid, i.e. how much volume flows past a pre-determined point in a small interval of time, can be measured by heating the flow and measuring the dissipation of heat in the flow. An example of a thermal sensor that can be used for these applications is a calorimetric flow sensor. It works by measuring the temperature of the fluid at a first point, heating the fluid at a second point, and then re-measuring the temperature of the fluid at a third point, the second point being located between the first and the third point. If the fluid flows fast, the temperature at the third point will be higher than the temperature at the first point. If the fluid is flowing slowly, the heat will be more evenly distributed in the fluid and the measured temperature difference between the two sensors will be smaller.

In the above-described sensors, when two samples comprising different components and different reagents of interest are brought together in order to react, a lot of background noise is present in the signal that is measured.

US 3,724,820 discloses a calorimeter for monitoring chemical reactions. Two samples (reagents) are separated by a hydraulic (impermeable) seal. When the system is at a desired temperature (i.e. at thermal equilibrium), the seal is pierced by means of a magnetic force imposed onto a needle; thereby the chemical reaction is initiated and the heat developed by the reaction is monitored.

### Summary of the invention

It is an object of the present invention to provide an improved method for measuring the heat of an event, e.g. a chemical or biological process such as e.g. binding, enzymatic conversion of a substrate or metabolism activation or deactivation.

The above objective is accomplished by a method and device according to the present invention.

The present invention provides a method for measuring heat generated by an event, e.g. a chemical or biological reaction, between at least two samples. The method comprises:
- providing at least a first sample comprising first components and first reagents of interest and at least a second sample comprising second components and second reagents of interest, the first sample and the second sample being separated by a selective wall or selective membrane,
- allowing establishment of a partial equilibrium only between the first components and the second components through the selective wall or membrane,
- after establishment of the partial equilibrium, applying a stimulus to the selective wall or membrane or the second sample for allowing occurrence of an event, e.g. chemical or biological process, between at least the first sample and the second sample, and
- measuring the heat of said event, e.g. chemical or biological process, by means of a thermal detector.

The materials for the selective wall or membrane are selected such that they are permeable to allow the establishment of only the partial equilibrium between the first components and the second components through the selective wall or membrane. An advantage of the method according to the present invention is that first partial equilibrium, i.e. at least chemical equilibrium, is established between the components, for example buffers, of the different samples before reaction between the reagents of interest present in the samples is started, and thus before the measurement is started. In that way, background noise, coming from chemical non-equilibrium, is minimised and the signal to noise ratio of the heat measurement is improved.

According to embodiments of the invention providing at least a first sample can be performed by providing at least a first compartment comprising the first sample and/or providing at least a second sample may be performed by providing at least a second compartment comprising the second sample. When, according to embodiments of the invention, the first and second sample are comprised within respectively a first and second compartment, the first and second compartment may be separated by a selective wall or membrane. An advantage of these embodiments is that evaporation of the samples is minimised.

In an embodiment of the invention, the first and second compartments may be in the form of first and second channels. The first compartment may be a hydrophilic compartment and a selective membrane may be positioned at a location in between the first and second channels.

In another embodiment, the first sample may be provided on the thermal detector and second sample may be provided by providing a tube comprising drops of the second sample. Optionally, a film may be provided between the first sample and the thermal detector in order to prevent cross-contamination of the thermal detector. The tube at least partly comprises a selective wall, in first instance separating from each other the reagents of interest present in the first and second samples. By forcing the second sample downward in the tube, partial equilibrium between the first and second samples is reached. By applying a stimulus to the selective wall, the second sample may pass through, and mixing of the first and second samples is achieved. In another embodiment, the first sample may be comprised within a recipient. In that case, evaporation of the first sample is prevented.

According to the invention, applying a stimulus to the selective wall or membrane may be performed by any of a magnetic force, laser cutting, a gravitational and/or rotational force or a thermal load. In other embodiments of the invention, the applied stimulus may be a chemical stimulus. In that case, a chemical reagent is added after partial equilibrium is established between the first and second components of respectively the first and second samples. The chemical reagent may etch the selective membrane so as to at least partially remove the selective membrane or to change its permeability.

In an embodiment of the invention, applying a stimulus to the selective wall or membrane may cause a change in properties of the selective membrane, for example a change in pore size. By choosing the right stimulus, the pore size of the membrane may be changed in such a way that only particular species can travel through the membrane and thus can mix with species of the other sample. By changing the stimulus, the pore size can be changed during measurement, possibly continuously.

In another embodiment of the invention, applying a stimulus to the selective membrane may cause partial or complete removal of the wall or membrane.

In still a further embodiment of the invention, the selective wall or membrane may comprise a movable part and applying a stimulus to the wall or membrane may cause a release of the movable part. The movable part may be a removable part. An advantage of this embodiment is that the removable part may be used, after release, as e.g. a stirrer.

According to embodiments of the invention, providing at least a first and a second sample may be performed by providing an inner compartment comprising at least the first and second sample separated by a selective wall or membrane. Applying a stimulus to the wall or membrane may in this embodiment be performed by putting an outer compartment over the inner compartment. The outer compartment may comprise at least one elongate member. By moving the at least one elongate member, the selective membrane may be ruptured and mixing of at least the first and second sample may occur.

In a particular embodiment the second outer compartment may comprise a first and a second elongate member located in such a way that when the second outer compartment is put over the first inner compartment the first elongate member is positioned at a first side of the selective wall or membrane and the second elongate member is positioned at a second side of the selective wall or membrane.

In a second aspect, the present invention provides a device for measuring heat generated by an event, e.g. chemical or biological process, between at least two samples. Such device comprises:
- a first compartment for comprising a first sample comprising first components and first reagents of interest,
- a second compartment for comprising a second sample comprising second components and second reagents of interest,
- a selective wall or membrane separating the first compartment from the second compartment and allowing establishment of a partial equilibrium only between the first components and the second components,
- means for applying a stimulus to the selective membrane or the second sample for allowing occurrence of an event, e.g. chemical or biological process, between the first and second reagents of interest, and
- means for detecting heat generated by the event, e.g. chemical or biological process, between the first and second reagents of interest.

The first compartment may be a hydrophilic channel and the second compartment may be a hydrophobic channel.

The second compartment may comprise a tube for containing drops of said second sample. The tube may include the selective wall. The first compartment may comprise a recipient. The tube may be applied inside the recipient.

The selective wall may be a selective membrane.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Fig. 1 illustrates the use of membranes to separate compartments.
Fig. 2 illustrates a method according to a first embodiment of the invention.
Fig. 3 illustrates another implementation of the method according to the first embodiment of the invention illustrated in Fig. 2.
Fig. 4 illustrates a method according to a second embodiment of the invention.
Fig. 5 illustrates a method according to a third embodiment of the invention.
Fig. 6 illustrates a method according to a fourth embodiment of the invention.
Fig.7 illustrates a method according to a fifth embodiment of the invention.
Fig. 8 illustrates a method according to a sixth embodiment of the invention.

In the different figures, the same reference signs refer to the same or analogous elements.

### Description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

The invention will now be described by a detailed description of several embodiments of the invention. It is clear that other embodiments of the invention can be configured according to the knowledge of persons skilled in the art without departing from the true spirit or technical teaching of the invention, the invention being limited only by the terms of the appended claims.

The present invention provides a method for measuring the heat of an event after chemical and preferably also thermal equilibrium between all sample components/ingredients/molecules has been reached, except for the reagents of interest. With reagents of interest is meant those reagents of which the heat release during e.g. a reaction has to be measured, i.e. the reagents of which the thermal energy generated by their interaction is under study. In other words, the samples may, besides the reagent or species of interest, also comprise other species, such as solvents and others. An event may, for example, be a reaction between two or more components or may be a stimulus acting on a sample. For example, the method according to the invention may be used to study a binding reaction of cytidine 2'-monophosphate (2'-CMP) to bovine pancreatic ribonulease A (RNAse A), which is a 1:1 binding reaction conducted in an aqueous solution, by measuring the heat.

The measurements are performed by means of a thermal sensor or a thermal detector. Examples of thermal sensors or detectors that can be applied with the method according to the present invention may, for example, be a thermopile junction a diode, a thermistor or any other temperature dependent material or sensor, or an IR detector.

The method according to the invention may be used to decrease the amount of non-specific events during an actual event of interest, e.g. a chemical or biological process such as, for example, a binding process, enzymatic conversion of a substrate or metabolism activation and/or deactivation.

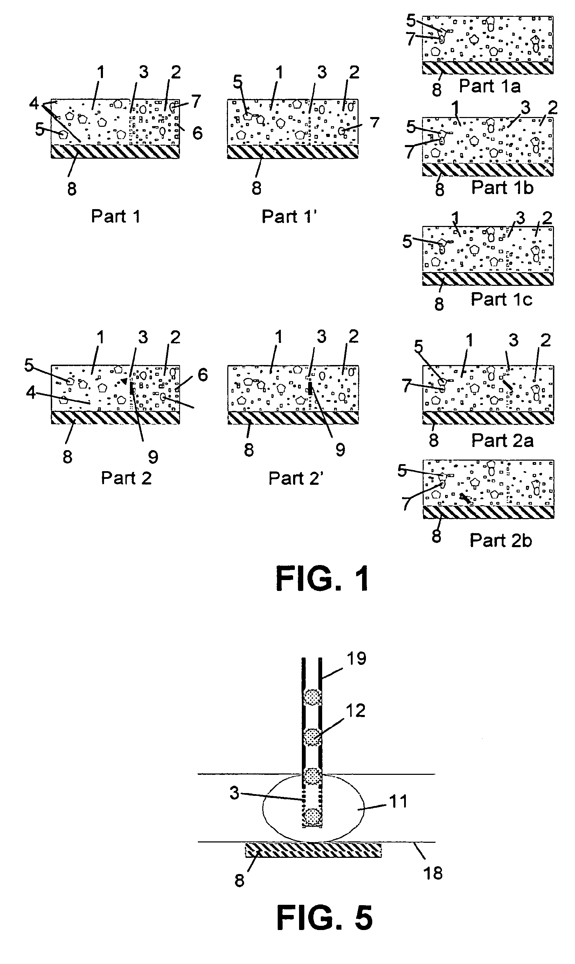

According to embodiments of the invention, the method may be performed in a system comprising two or more compartments, each compartment comprising a sample, which are in partial contact with each other and preferably also in thermal contact with a thermal sensor or thermal detector. This is illustrated in part 1 of Fig. 1. The system comprises a first compartment 1 and a second compartment 2 separated from each other by means of a semi-permeable or selective wall or membrane 3 having pores. The compartments 1, 2 may be formed of thin-wall materials such as thin-wall polymers, glass, plastics or may be defined by means of films formed out of a suitable material. With thin-wall materials is meant materials having a low thermal mass, i.e. a thermal mass so as to almost instantaneously transmitting heat from one side to another.

The first compartment 1 may comprise a first sample comprising first components 4, e.g. a first buffer, and a first reagent of interest 5. The second compartment 2 may comprise a second sample comprising second components 6, e.g. a second buffer, and a second reagent of interest 7. The first components 4, e.g. first buffer, may be the same as or different from the second components 6, e.g. second buffer. When the two components 4, 6, e.g. buffers, come into contact with each other, a chemical non-equilibrium occurs, e.g. concentrations of first and second components in the first and second samples respectively may be different. The contacted samples will evolve towards a chemical equilibrium, and it has been found that this leads to noise in measured temperature signals when this happens during temperature measurements relating to interaction of reagents of interest. In order to get rid of this, according to the present invention, a chemical equilibrium is established between the first components 4, e.g. first buffer, and the second components 6, e.g. second buffer, before the thermal measurements are carried out. Therefore, the size of the pores of the semi-permeable wall or membrane 3 are chosen so as to allow sample components 4, 6 to travel through the wall or membrane 3 in order to reach chemical and preferably also thermal equilibrium. The size of the pores of the wall or membrane 3 are also chosen so as to not allow reagents of interest 5, 7, that are the reagents of the reaction under study, to travel through the wall or membrane 3. This is illustrated in Part 1' of Fig. 1 and is called partial equilibrium, i.e. equilibrium between first components 4, 6 but not between reagents of interest 5, 7.

When partial equilibrium is reached, a stimulus is applied to the semi-permeable wall or membrane 3 allowing reagents of interest 5, 7 to make contact. Preferably this stimulus will limit the thermal stress on the measurement.

In other embodiments, however, the first sample may not be comprised in a first compartment (see further).

Hereinafter, the method according to the present invention will be described by means of different embodiments in order to clarify the concept of the method.

According to an embodiment of the present invention, by applying this stimulus the semi-permeable or selective wall or membrane 3 may completely (Part 1a of Fig. 1) or partially (Part 1c of Fig. 1) be removed or the wall or membrane characteristics (e.g. membrane potential or membrane pore size) may be changed, e.g. the pore size of the wall or membrane 3 may be enlarged (Part 1b of Fig. 1) so as to allow reagents of interest 5, 7 to travel to the other compartment 2, 1 respectively,

In another embodiment, the stimulus may be such as to be able to displace or move a moveable item 9 located between the first and second compartment 1, 2, for example on the wall or membrane 3 as illustrated in Part 2 of Fig. 1. After removal of this moveable item 9 from its original location, it may be used as something else, e.g. as a stirrer (e.g. magnetic stirrer, Part 2b of Fig. 1). In some cases a stirrer can be present already. The moveable item 9 can also be moved in a direction as to induce a time-dependent contacting of the reagents of interest (Part 2a of Fig. 1).

In other embodiments, the stimulus may be an accurately controlled stimulus applied to a release material in the semi-permeable wall or membrane 3. The release material can be a chemically, mechanically or thermally triggerable release material. Examples of thermally triggerable release materials are a wax or gel, which may melt at a pre-determined temperature. A corresponding stimulus may be a thermal stress, for example a power or temperature load, on the thermally triggerable release material present in the selective membrane 3 so as to melt it for enabling a contact between the reagents of interest 5, 7. Chemically or mechanically triggerable release materials will respectively receive a chemical or a mechanical stimulus so as to at least temporarily moving or removing the release material and so enabling contact between the reagents 5, 7 of interest.

According to the invention, the stimulus may be induced by e.g.:
- a magnetic force, such as, for example, an (electro-) magnet that attracts a part of the wall or membrane 3, in order to open one or more holes in this wall or membrane 3,
- laser cutting, i.e. a laser cuts holes in the wall or membrane 3 that separates the first compartment 1 from the second compartment 2, or removes the wall or membrane 3 or parts thereof,
- a gravitational and/or rotational force, for example a movable item 9 can be removed by physically rotating at least parts of the system,
- a thermal load that induces a change in the wall or membrane 3 (e.g. melting) or that induces an expansion/compression (cycle) that is used to pump one reagent from one compartment 1, 2 into the other compartment 2, 1,
- or any other suitable force.

In other embodiments of the invention, the stimulus may be a chemical stimulus. Therefore, according to these embodiments, after partial equilibrium is established between the first components 4 of the first sample and the second components 6 of the second sample, a chemical reagent may be added to at least one of the first or second compartments 1, 2. The chemical reagent should be such that it does not react with the first and second components 4, 6 nor with the first and second reagents of interest 5, 7 but does react with the semi-permeable or selective wall or membrane 3. Reaction of the chemical reagent with the semi-permeable or selective wall or membrane 3 may occur by e.g. etching the wall or membrane 3. The chemical reagent may etch the semi-permeable or selective wall or membrane 3 so as to at least partially, and possibly completely, remove the semi-permeable or selective wall or membrane 3.

Contacting of the reagents of interest 5, 7 after the partial equilibrium is established between the components 4 of the first sample and the components 6 of the second sample, can also be induced by moving some or all of the liquids present in the samples. This can be done by e.g. capillary forces, electro-kinetic forces, electrostatic forces with e.g. electrodes, forces introduced by the use of communicating vessels, or any other suitable force.

In a first embodiment of the present invention, a first compartment 1 is separated from a second compartment 2 by means of a semi-permeable or selective membrane 3. According to this first embodiment, the compartments 1, 2 may be defined by means of a first film 13 in between the thermal sensor or detector 8 and the first sample and a second film 14. The first and second film 13, 14 may comprise a polymer and may have a thickness smaller than 100 µm, preferably between 4 and 50 µm. The first compartment 1 comprises a first sample 11 which is located above or on the thermal detector or sensor 8. The second compartment 2 comprises a second sample 12 and is separated from the first compartment 1 by the selective membrane 3. Examples of materials that can be used for semi-permeable membranes 3 can, for example, be found in "New materials permeable to water vapour", H. Trübel, Springer, 1999; "Diffusion in and through polymers", W. R. Vieth, Hanser, 1991; "Biomaterials", S. V. Bhat, Alpha Science, 2002.

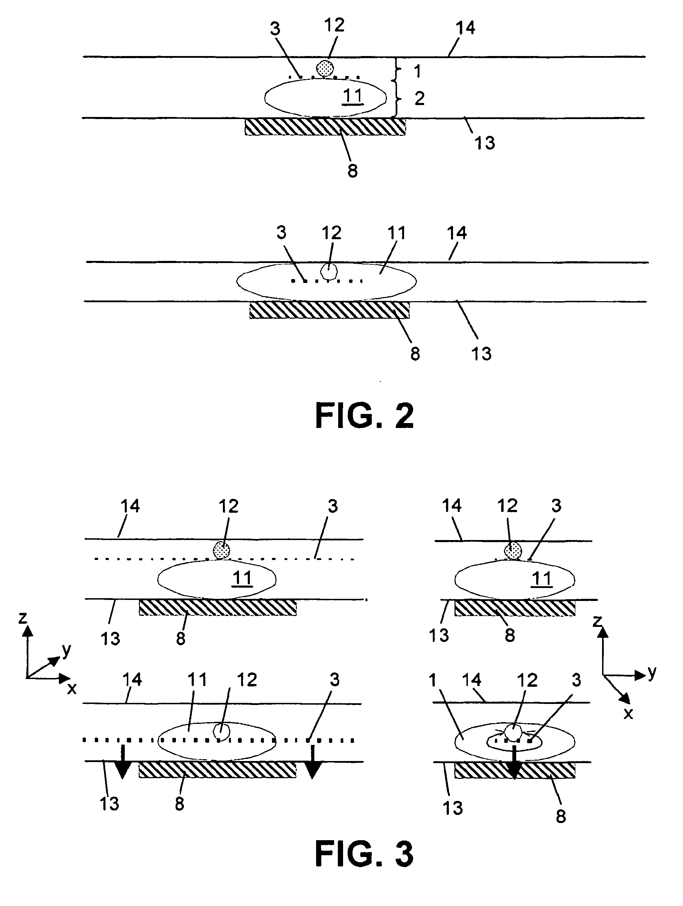

After partial equilibrium is achieved, i.e. the first and second components of the first sample 11 and second sample 11 respectively get into at least chemical equilibrium, but not the reagents of interest of these samples, the first and second samples 11, 12 are brought into full contact in order to merge. In order to do this, a stimulus is applied to the wall or membrane 3. This may be done for example by squeezing the two films 13, 14 together (see Fig. 2). If the wall or membrane 3 has suitable dimensions then squeezing the two films 13, 14 together will force the wall or membrane 3 into the first sample 11, thus mixing the first and second samples 11, 12. Another possibility of merging both samples 11, 12 is by means of applying a stimulus to the selective membrane 3 in order to partially or fully remove it and allow for the samples 11, 12 to merge.

In case a third sample (not shown) needs to be added, this procedure can be repeated. The third sample may be put on top of a piece of selective membrane before this as a whole is put onto mixed sample. The second film 14 covers the whole of mixed sample / membrane / third sample. A stimulus is applied to the membrane so as to allow the third sample to mix with the already previously mixed sample.

The merging of the first sample 11 and the second sample 12 may also be accomplished by pulling the semi-permeable or selective membrane 3 towards the thermal sensor or detector 8, rather than moving the first and second films 13, 14 towards each other. In the latter case, the selective membrane 3 may, for example, be a strip (see Fig. 3) with a dimension smaller than the width taken by the first sample 11, thus allowing the membrane 3 together with the second sample 12 to be drawn into the first sample 11. The selective membrane 3 may, in most cases, be hydrophilic such that when it is pulled down, it keeps hold of the second sample 12, thus drawing the second sample 12 into the first sample 11. In Fig. 3, the left hand side shows the situations before and after movement of the membrane 3 (top resp. bottom of Fig. 3), movement of the membrane 3 resulting in mixing of the first and second samples 11, 12. The right hand side shows the same situations but in another cross-section, as illustrated by the reference axis shown, thus illustrating that the membrane 3 is only a strip.

When the first and second samples 11, 12 have mixed, the reagents 5, 7 of interest therein react with each other, thus generating heat which is measured by means of a thermal sensor or detector 8.

The first film 13 prevents contamination of the thermal sensor or detector 8 and allows re-using the thermal sensor or detector 8 time after time (the film is disposable). The second film 14 covers the whole to prevent evaporation to a certain degree.

For reasons of sample loss, it is best to keep the piece of selective membrane 3 that was in contact with the samples 11, 12, in the sample that is being monitored. However, according to embodiments of the present invention the piece of selective membrane 3 may be removed during or after mixing of the first and second samples 11, 12.

When, for example, titrations are to be done, the above-described method can be repeated several times, or may be performed by means of a continuous titration or by creating a time-dependent opening in the membrane 3 as in Part 2a of Fig. 1.

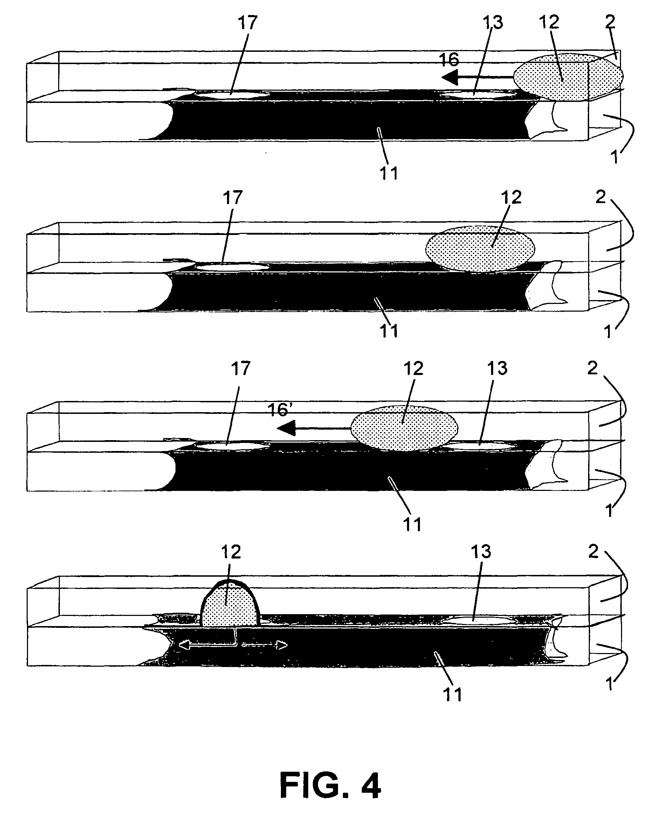

In a preferred embodiment, the compartments 1, 2 are formed by channels. A first compartment or channel 1 is hydrophilic and comprises a first sample 11. The second compartment or channel 2 is hydrophobic and comprises at least one drop of a second sample 12. The at least one drop of the second sample 12 may be moved by an external force, for example by pressure or suction, in a direction indicated by arrow 16. In a first phase the at least one drop of the second sample 12 is moved above a semi-permeable membrane 13 between the first and second compartments 1, 2 as can be seen in the second drawing from the top in Fig. 4. At that location, partial equilibrium is established between first components 4 present in the first sample 11 and second components 6 present in the second sample 12, as described above. After partial equilibrium is reached, the at least one drop of the second sample 12 is moved to a next stage, under influence of a further external force 16' (see third part of Fig. 4). This is a hole or via 17 which is a way to the hydrophilic channel 1. When the at least one drop of the second sample 12 has arrived there, it is sucked in the first sample 11 by forces mainly due to capillary and surface tension effects. In that stage, the at least one drop of the second sample 12 merges completely with the first sample 11, thus allowing reagents 5, 7 of interest to interact. Heat generated by the reaction of these reagents 5, 7 is measured by means of a thermal sensor or detector 8 (not illustrated in Fig. 4).

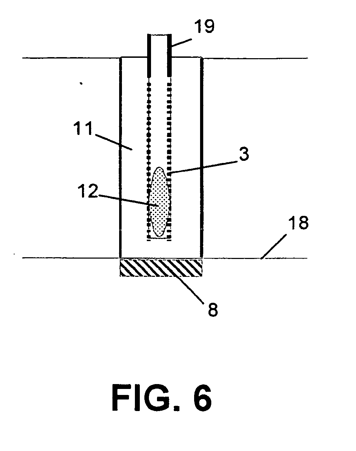

Another embodiment of the present invention is schematically illustrated in Fig. 5. A first sample 11 makes thermal contact with a thermal sensor or detector 8, optionally through a film 18. At least one drop of a second sample 12 is introduced through a tube 19 of which one end that makes contact with the first sample 11 is made out of a semi-permeable or selective part and forms a semi-permeable or selective wall 3. The at least one drop of the second sample 12 can be moved by an external force, for example pressure or suction, and in a first phase is moved to the level of the semi-permeable wall 3 as seen in Fig. 5. At that stage, partial equilibrium, i.e. at least chemical equilibrium, between components 4 of the first sample 11 and components 6 of a second sample may be established. After partial equilibrium has been reached, the at least one drop of the second sample 12 is moved further to be pushed through the wall 3 in order to merge with the first sample 11.

The tube 19 may be thin-walled and/or may comprise thermally isolating material. The tube 19 may be multi-lumen, i.e. may have a capillary configuration with multiple channels, to introduce different drops of the second sample 12. Alternatively the tube 19 may be fork-like, to enable two or more drops of the second sample 12 to be delivered at the same time to first samples 11 above different thermal detectors 8 (not illustrated).

According to the above-described embodiment of the invention, the first sample 11 is not comprised within a first compartment 1. However, in a further embodiment, illustrated in Fig. 6, the first sample 11 may be held in place by means of a recipient 20 above or on the thermal detector 8. A tube 19 with semi-permeable wall 3 is applied in the recipient 20. At least one drop of second sample 12 is applied inside the tube 19. The at least one drop of second sample 12 is allowed to establish partial equilibrium with the first sample 11 through the semi-permeable wall 13 of the tube 19. In this case the area over which the two samples are in contact through the semi-permeable wall 3 may be large and thus equilibrium may be reached faster than in the previous embodiment. Thereafter, the at least one drop of second sample 12 is forced through the semi-permeable wall 3, e.g. by means of pressure or suction, and the reagents 5 in the first sample interact with the reagents 7 in the second sample. The reaction heat is measured by means of detector 8.

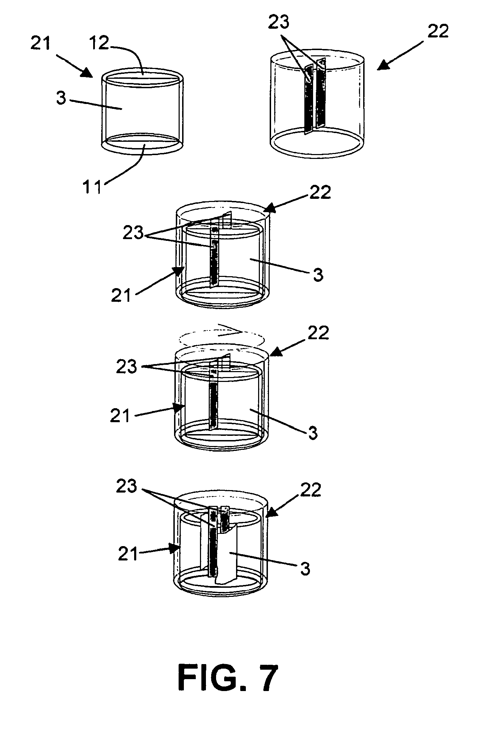

In a further embodiment, which is shown in Fig. 7, a first or inner compartment 21 comprises at least a first and a second sample 11, 12 comprising respectively first components 4 and reagents of interest 5 and second components 6 and reagents of interest 7. The at least two samples 11, 12 are separated by a semi-permeable or selective wall or membrane 3. The wall or membrane 3 may preferably be substantially flat but may also have any other suitable shape. The at least two samples 11, 12 can reach partial equilibrium by bringing the first and second components 4, 6 into chemical equilibrium through the semi-permeable wall or membrane 3. Due to the properties of the semi-permeable or selective membrane 3 and as discussed above, there is no complete equilibrium, i.e. there is not yet an equilibrium between the first and second reagents of interest 5, 7. In a further step of the method according to this embodiment, a second or outer compartment 22 comprising first and second elongate members 23, e.g. rods or stirrers, is provided over the first or inner compartment 21. The two elongate members 23, e.g. rods or stirrers, are located such, that when the second compartment 22 is put over the first compartment 21, one of the first and second elongate members 23, e.g. rods or stirrers, is positioned at one side of the wall or membrane 3 and the other elongate member 23 is positioned at the other side of the wall or membrane 3. By moving the first and second elongate members 23, e.g. rods or stirrers, for example by twisting or rotating the elongate members 23, e.g. rods or stirrers, the membrane 3 is ruptured at its edges, as illustrated at the bottom part of Fig. 7, and thus mixing of the two samples 11, 12 can occur, leading to reaction between the first and second reagents of interest 5, 7. This reaction generates heat which is detected by a heat sensor or detector (not represented in Fig. 7).

An advantage of the above-described embodiment is that by twisting or rotating of the elongate members 23, they can at the same time be used as a stirrer in order to mix the first and second sample 11, 12 so as to enhance reaction velocity.

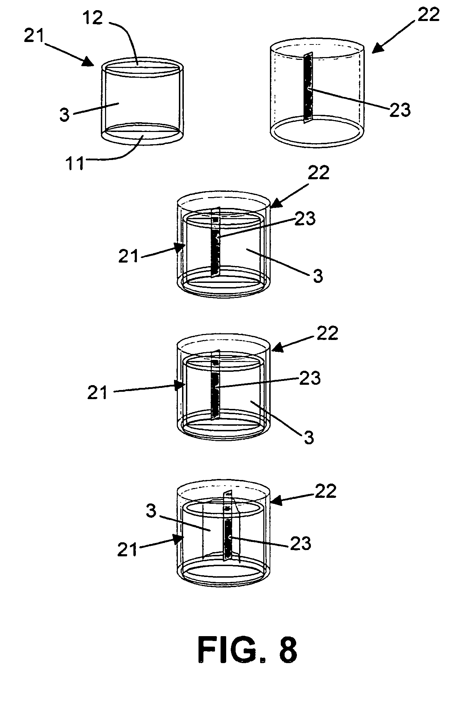

In still a further embodiment illustrated in Fig. 8 two samples 11, 12 are separated in a first compartment 21 by a semi-permeable membrane 3 as discussed above with respect to Fig. 7. In this embodiment, however, a single elongate member 23, e.g. a rod or stirrer, is located in the second compartment 22 so that, when the second compartment 22 is put over the first compartment 21, the elongate member 23 is positioned at only one side of the membrane 3. By moving the elongate member 23, e.g. translation inside the first compartment 21, the membrane 3 is ruptured at its edges, as illustrated at the bottom of Fig. 8, to thereby bring both samples 11, 12 into complete equilibrium. Reagents 5, 7 in the first and second sample 11, 12 interact with each other, thus generating heat which is measured by a heat sensor or detector (not illustrated in Fig. 8).

It is to be understood that although preferred embodiments, specific constructions and configurations, as well as materials, have been discussed herein for devices according to the present invention, various changes or modifications in form and detail may be made. For example, the present invention includes within its scope as defined by the appended claims other methods of forming a partial equilibrium between two samples 11, 12 such as e.g. liquids, using a semi-permeable membrane 3, and then altering the position of the membrane 3 in order to bring the two samples into complete equilibrium. Furthermore, instead of underneath the first and second sample, and thus under the compartments, the detector 8 may be placed in any other suitable position, such as, for example, integrated into a side wall or bottom plate of a vessel or compartment comprising the samples or suspended in the samples.

## Claims

1. Method for measuring heat generated by a chemical or biological process between at least two samples (11, 12), the method comprising:
- providing at least a first sample (11) comprising first components (4) and first reagents of interest (5) and at least a second sample (12) comprising second components (6) and second reagents of interest (7), the first sample (11) and the second sample (12) being separated by a selective wall (3),
- allowing establishment of a partial equilibrium only between the first components (4) and the second components (6) through the selective wall (3),
- applying a stimulus to the selective wall (3) or the second sample (12) for allowing occurrence of a chemical or biological process between the first reagent of interest (5) and the second reagent of interest (7), and
- measuring heat generated by said chemical or biological process.

2. A method according to claim 1, wherein applying a stimulus to the selective wall (3) or the second sample (12) is performed by any of a magnetic force, laser cutting, a gravitational and/or rotational force or a thermal load.

3. A method according to claim 1 or 2, wherein the stimulus is applied to the selective wall (3).

4. A method according to claim 3, wherein applying a stimulus to the selective wall (3) is performed by adding a chemical reagent to at least one of the first or second sample (11, 12) for at least partially removing the selective wall (3).

5. A method according to claim 3 or 4, wherein applying a stimulus to the selective wall (3) causes a change in properties of the selective wall (3).

6. A method according to any of claims 3 to 5, wherein applying a stimulus to the selective wall (3) causes the selective wall (3) to be partially or completely removed.

7. A method according to any of claims 3 to 6, the selective wall (3) comprising a removable part (9), wherein applying a stimulus to the selective wall (3) causes a release of said removable part (9).

8. A method according to any of claim 3 to 7, wherein providing at least a first sample (11) and at least a second sample (12) is performed by providing a first inner compartment (21) comprising at least said first sample (11) and said second sample (12), the first and second samples (11, 12) being separated by a selective wall (3).

9. A method according to claim 8, wherein applying a stimulus to the selective wall (3) is performed by:
- providing a second outer compartment (22) over the first inner compartment (21), the second outer compartment (22) comprising at least one second elongate member (23), and
- moving said at least one elongate member (23) for rupturing the selective wall (3).

10. A method according to claim 9, wherein providing a second outer compartment (22) comprises providing a second outer compartment (22) comprising a first and a second elongate member (23) located such that when the second outer compartment (22) is put over the first inner compartment (21) the first elongate member (23) is positioned at a first side of the selective membrane (3) and the second elongate member (23) is located at a second side of the selective membrane (3).

11. A device for measuring heat generated by a chemical or biological process between at least two samples (11, 12), comprising:
- a first compartment (1) for comprising a first sample (11) comprising first components (4) and first reagents (5) of interest,
- a second compartment (2) for comprising a second sample (12) comprising second components (6) and second reagents (7) of interest,
- a selective wall (3) separating the first compartment (1) from the second compartment (2) and allowing establishment of a partial equilibrium only between the first components (4) and the second components (6),
- means for applying a stimulus to the selective wall (3) or the second sample (12) for allowing occurrence of an chemical or biological process between the first and second reagents of interest (5, 7), and
- means for detecting heat generated by the chemical or biological process between the first and second reagents of interest (5, 7).

12. A device according to claim 11, wherein the first compartment (1) is a hydrophilic channel.

13. A device according to any of claims 11 or 12, wherein the second compartment (2) is a hydrophobic channel.

14. A device according to claim 11, wherein the second compartment (2) comprises a tube (19) for containing drops of said second sample (12).

15. A device according to claim 14, wherein the first compartment (1) comprises a recipient (20).

16. A device according to any of claims 11 to 15, wherein the selective wall (3) is a selective membrane.

## Patentansprüche

1. Verfahren zum Messen der Wärme, die durch einen zwischen mindestens zwei Proben (11, 12) stattfindenen chemischen oder biologischen Prozess erzeugt wird, wobei das Verfahren die folgenden Schritte aufweist:
- Bereitstellen von mindestens einer ersten Probe (11), die erste Komponenten (4) und erste interessierende Reagenzien (5) aufweist, sowie mindestens einer zweiten Probe (12), die zweite Komponenten (6) und zweite interessierende Reagenzien (7) aufweist, wobei die erste Probe (11) und die zweite Probe (12) durch eine selektive Wand (3) getrennt sind,
- Ermöglichen eines teilweisen Gleichgewichts zwischen lediglich den ersten Komponenten (4) und den zweiten Komponenten (6) durch die selektive Wand (3),
- Anlegen eines Reizes bzw. Stimulus an die selektive Wand (3) oder die zweite Probe (12), um einen chemischen oder biologischen Prozess zwischen dem ersten interessierenden Reagenz (5) und dem zweiten interessierenden Reagenz (7) zu ermöglichen, und
- Messen der Wärme, die durch den chemischen oder biologischen Prozess erzeugt wird.

2. Verfahren nach Anspruch 1, wobei das Anlegen eines Reizes an die selektive Wand (3) oder die zweite Probe (12) mittels einer magnetischen Kraft, Laserschneiden, einer Schwerkraft und/oder Drehkraft oder einer thermischen Last erzeugt wird.

3. Verfahren nach Anspruch 1 oder 2, wobei der Reiz an die selektive Wand (3) angelegt wird.

4. Verfahren nach Anspruch 3, wobei das Anlegen eines Reizes an die selektive Wand (3) ausgeführt wird, indem ein chemisches Reagenz zu der ersten und/oder der zweiten Probe (11, 12) gegeben wird, um die selektive Wand zumindest teilweise zu entfernen.

5. Verfahren nach Anspruch 3 oder 4, wobei das Anlegen eines Reizes an die selektive Wand (3) eine Veränderung der Eigenschaften der selektiven Wand (3) verursacht.

6. Verfahren nach einem der Ansprüche 3 bis 5, wobei das Anlegen eines Reizes an die selektive Wand (3) eine teilweise oder gänzliche Entfernung der selektiven Wand (3) verursacht.

7. Verfahren nach einem der Ansprüche 3 bis 6, wobei die selektive Wand (3) einen entfernbaren Teil (9) aufweist, und wobei das Anlegen eines Reizes an die selektive Wand (3) eine Freigabe des entfernbaren Teiles (9) verursacht.

8. Verfahren nach einem der Ansprüche 3 bis 7, wobei das Bereitstellen von mindestens einer ersten Probe (11) und mindestens einer zweiten Probe (12) durchgeführt wird, indem eine erste innere Kammer (21), die zumindest die erste Probe (11) und die zweite Probe (12) enthält, bereitgestellt wird, wobei die erste und die zweite Probe (11, 12) durch eine selektive Wand (3) voneinander getrennt sind.

9. Verfahren nach Anspruch 8, wobei das Anlegen eines Reizes an die selektive Wand (3) ausgeführt wird durch:
- Bereitstellen einer zweiten äußeren Kammer (22) über der ersten inneren Kammer (21), wobei die zweite äußere Kammer (22) mindestens ein zweites langgestrecktes Element (23) umfasst, und
- Bewegen des mindestens einen langgestreckten Elements (23), um die selektive Wand (3) einzureißen.

10. Verfahren nach Anspruch 9, wobei das Bereitstellen der zweiten äußeren Kammer (22) das Bereitstellen einer zweiten äußeren Kammer (22) mit einem ersten und einem zweiten langgestreckten Element (23) umfasst, die so angeordnet sind, dass wenn die zweite äußere Kammer (22) über die erste innere Kammer (21) gestülpt wird, dann ist das erste langgestreckte Element (23) an einer ersten Seite der selektiven Membran (3) positioniert und das zweite langgestreckte Element (23) ist an einer zweiten Seite der selektiven Membran (3) positioniert.

11. Vorrichtung zum Messen der Wärme, die durch einen zwischen mindestens zwei Proben (11, 12) stattfindenen chemischen oder biologischen Prozess erzeugt wird, mit:
- einer ersten Kammer (1) zum Aufnehmen von mindestens einer ersten Probe (11), die erste Komponenten (4) und erste interessierende Reagenzien (5) aufweist,
- einer zweiten Kammer (2) zum Aufnehmen von mindestens einer zweiten Probe (12), die zweite Komponenten (6) und zweite interessierende Reagenzien (7) aufweist,
- einer selektiven Wand (3) zum Trennen der ersten Kammer (1) und der zweiten Kammer (2) und zum Ermöglichen eines teilweisen Gleichgewichts zwischen lediglich den ersten Komponenten (4) und den zweiten Komponenten (6),
- Mitteln zum Anlegen eines Reizes bzw. Stimulus an die selektive Wand (3) oder die zweite Probe (12), um einen chemischen oder biologischen Prozess zwischen dem ersten und dem zweiten interessierenden Reagenz (5, 7) zu ermöglichen, und
- Mitteln zum Messen der Wärme, die durch den chemischen oder biologischen Prozess zwischen dem ersten und dem zweiten interessierenden Reagenz (5, 7) erzeugt wird.

12. Vorrichtung nach Anspruch 11, wobei die erste Kammer (1) ein wasserbindender bzw. hydrophiler Kanal ist.

13. Vorrichtung nach Anspruch 11 oder 12, wobei die zweite Kammer (2) ein wasserabweisender bzw. hydrophober Kanal ist.

14. Vorrichtung nach Anspruch 11, wobei die zweite Kammer (2) einen Schlauch (19) zum Aufnehmen von Tropfen der zweiten Probe (12) aufweist.

15. Vorrichtung nach Anspruch 14, wobei die erste Kammer (1) einen Behälter (20) aufweist.

16. Vorrichtung nach einem der Ansprüche 11 bis 15, wobei die selektive Wand (3) eine selektive Membran ist.

## Revendications

1. Procédé pour mesurer la chaleur produite par un processus chimique ou biologique entre au moins deux échantillons (11, 12), le procédé comprenant :
- la fourniture d'au moins un premier échantillon (11) comprenant des premiers composants (4) et des premiers réactifs intéressants (5) et d'au moins un deuxième échantillon (12) comprenant des deuxièmes composants (6) et des deuxièmes réactifs intéressants (7), le premier échantillon (11) et le deuxième échantillon (12) étant séparés par une paroi sélective (3),
- l'établissement d'un équilibre partiel uniquement entre les premiers composants (4) et les deuxièmes composants (6) à travers la paroi sélective (3),
- l'application d'un stimulus à la paroi sélective (3) ou au deuxième échantillon (12) pour permettre la survenue d'un processus chimique ou biologique entre le premier réactif intéressant (5) et le second réactif intéressant (7), et
- la mesure de la chaleur produite par ledit processus chimique ou biologique.

2. Procédé selon la revendication 1, dans lequel l'application d'un stimulus à la paroi sélective (3) ou au deuxième échantillon (12) est réalisée par l'un quelconque d'une force magnétique, d'un découpage au laser, d'une force gravitationnelle et/ou d'une force de rotation ou d'une charge thermique.

3. Procédé selon la revendication 1 ou 2, dans lequel le stimulus est appliqué à la paroi sélective (3).

4. Procédé selon la revendication 3, dans lequel l'application d'un stimulus à la paroi sélective (3) est réalisée en ajoutant un réactif chimique à au moins l'un du premier ou deuxième échantillon (11, 12) pour retirer au moins partiellement la paroi sélective (3).

5. Procédé selon la revendication 3 ou 4, dans lequel l'application d'un stimulus à la paroi sélective (3) entraîne une modification des propriétés de la paroi sélective (3).

6. Procédé selon l'une quelconque des revendications 3 à 5, dans lequel l'application d'un stimulus à la paroi sélective (3) entraîne le retrait partiel ou complet de la paroi sélective (3).

7. Procédé selon l'une quelconque des revendications 3 à 6, la paroi sélective (3) comprenant une partie amovible (9), dans lequel l'application d'un stimulus à la paroi sélective (3) entraîne une libération de ladite partie amovible (9).

8. Procédé selon l'une quelconque des revendications 3 à 7, dans lequel l'apport d'au moins un premier échantillon (11) et au moins un deuxième échantillon (12) est réalisé en prévoyant un premier compartiment interne (21) contenant au moins ledit premier échantillon (11) et ledit deuxième échantillon (12), les premier et deuxième échantillons (11, 12) étant séparés par une paroi sélective (3).

9. Procédé selon la revendication 8, dans lequel l'application d'un stimulus à la paroi sélective (3) est réalisée en :
- disposant un deuxième compartiment externe (22) par-dessus le premier compartiment interne (21), le deuxième compartiment externe (22) comprenant au moins un deuxième élément allongé (23), et
- déplaçant ledit au moins un élément allongé (23) pour déchirer la paroi sélective (3).

10. Procédé selon la revendication 9, dans lequel la disposition d'un deuxième compartiment externe (22) comprend la disposition d'un deuxième compartiment externe (22) comprenant un premier et un deuxième élément allongé (23) situés de sorte que lorsque le deuxième compartiment externe (22) est posé par-dessus le premier compartiment interne (21), le premier élément allongé (23) se trouve au niveau d'un premier côté de la membrane sélective (3) et le deuxième élément allongé (23) se trouve au niveau d'un second côté de la membrane sélective (3).

11. Procédé pour mesurer la chaleur produite par un processus chimique ou biologique entre au moins deux échantillons (11, 12), comprenant :
- un premier compartiment (1) pour contenir un premier échantillon (11) contenant des premiers composants (4) et des premiers réactifs (5) intéressants,
- un deuxième compartiment (2) pour contenir un deuxième échantillon (12) contenant des deuxièmes composants (6) et des deuxièmes réactifs (7) intéressants,
- une paroi sélective (3) séparant le premier compartiment (1) du deuxième compartiment (2) et permettant l'établissement d'un équilibre partiel uniquement entre les premiers composants (4) et les deuxièmes composants (6),
- un moyen pour appliquer un stimulus à la paroi sélective (3) ou au deuxième échantillon (12) pour permettre la survenue d'un processus chimique ou biologique entre les premiers et seconds réactifs intéressants (5, 7), et
- un moyen pour détecter la chaleur produite par le processus chimique ou biologique entre les premiers et seconds réactifs intéressants (5, 7).

12. Dispositif selon la revendication 11, dans lequel le premier compartiment (1) est un canal hydrophile.

13. Dispositif selon l'une quelconque des revendications 11 ou 12, dans lequel le deuxième compartiment (2) est un canal hydrophobe.

14. Dispositif selon la revendication 11, dans lequel le deuxième compartiment (2) comprend un tube (19) pour contenir des gouttes dudit deuxième échantillon (12).

15. Dispositif selon la revendication 14, dans lequel le premier compartiment (1) comprend un récipient (20).

16. Dispositif selon l'une quelconque des revendications 11 à 15, dans lequel la paroi sélective (3) est une membrane sélective.
